# EUROPÄISCHE PATENTSCHRIFT

(11) **EP 2 662 606 B1**
(45) Veröffentlichungstag und Bekanntmachung des Hinweises auf die Patenterteilung: **23.09.2015**
(21) Anmeldenummer: 13165619.1
(22) Anmeldetag: 26.04.2013
(51) Int. Cl.: F16L 57/06, F16L 11/15, F01N 3/20, F16L 53/00

(54) **Schutzrohr für eine zu temperierende Medienleitung und Leitungsaggregat**
Protective corrugated tubes for a pipe with a medium to be tempered, pipe module thereof
Tube de protection pour une conduite de fluide à tempérer et module de conduite

(30) Priorität: 07.05.2012 DE 202012101676 U
(43) Veröffentlichungstag der Anmeldung: 13.11.2013
(73) Patentinhaber: TI Automotive (Fuldabrück) GmbH, 34277 Fuldabrück (DE)
(72) Erfinder: Jensen, Hans, 73265 Dettingen unter Teck (DE); Barthel, Iris, 34270 Schauenburg (DE); Häckel, André, 34513 Waldeck (DE); Orth, Joachim, 34560 Fritzlar (DE)
(74) Vertreter: Rohmann, Michael

(56) Entgegenhaltungen:
- EP-A1- 1 798 326
- EP-A1- 2 412 963
- DE-A1-102005 053 390
- DE-C1- 19 826 950
- DE-U1- 9 407 681
- US-A1- 2004 239 109
- US-B1- 6 447 709

## Beschreibung

Die Erfindung betrifft ein Schutzrohr für eine zu temperierende Medienleitung, in der ein zu temperierendes fluides Medium, insbesondere eine zu temperierende bzw. zu beheizende Harnstofflösung geführt wird, wobei das Schutzrohr bereichsweise als Wellrohr ausgebildet ist, wobei zumindest ein mittlerer Wellrohrabschnitt mit mittleren Wellenbergen und Wellentälern vorgesehen ist, wobei an zumindest einem Ende des Schutzrohres zumindest ein endseitiger Wellrohrabschnitt mit endseitigen Wellenbergen und Wellentälern angeordnet ist und wobei zwischen dem mittleren Wellrohrabschnitt und einem endseitigen Wellrohrabschnitt zumindest ein zylinderförmiger Rohrabschnitt angeordnet ist. Die Erfindung betrifft weiterhin ein Leitungsaggregat mit einem solchen Schutzrohr und einer in dem Schutzrohr aufgenommenen zu temperierenden Medienleitung sowie mit einem Verbinder bzw. Schnellverbinder.

In Kraftfahrzeugen, insbesondere in Fahrzeugen mit Dieselmotor, ist in der Regel ein sogenanntes SCR-System mit einem SCR-Katalysator für die Abgasbehandlung vorhanden (SCR: Selective Catalytic Reduction). Für eine effektive Reduzierung der im Abgas eines Kraftfahrzeuges enthaltenen Stickoxide wird dem Abgas vor einem SCR-Katalysator eine Harnstofflösung zudosiert. Eine solche Harnstofflösung bzw. wässrige Harnstofflösung hat den Nachteil, dass Harnstoff bei Temperaturen unter -11 °C gefriert und teilweise auskristallisiert. Dadurch wird eine weitere funktionssichere Zufuhr der Harnstofflösung behindert oder vollständig blockiert und eine effektive Reduzierung der Stickoxide im Abgas beeinträchtigt bzw. verhindert. Um derartige Störungen zu vermeiden, werden die Zuführungsleitungen bzw. Rohrleitungen für die Harnstofflösung beheizt. Die Beheizung kann beispielsweise elektrisch erfolgen, und zwar insbesondere mit Heizdrähten oder Heizfolien.

Weiterhin ist es bereits bekannt, eine solche beheizbare Medienleitung mit einem äußeren Schutzrohr zu umgeben. Das Schutzrohr umgibt die beheizbare Medienleitung in der Regel mit einem bestimmten Abstand und im Zwischenraum zwischen Schutzrohr und Medienleitung ist Luft bzw. eine Luftschicht angeordnet. Das Schutzrohr dient einerseits dem Schutz vor äußeren mechanischen Einflüssen und andererseits auch der thermischen Isolierung. Aus der Praxis ist es bekannt, ein solches Schutzrohr als Wellrohr auszubilden, und zwar normalerweise über die gesamte Länge bzw. im Wesentlichen über die gesamte Länge des Schutzrohres. Diese in Form von Wellrohren ausgeführten Schutzrohre haben jedoch den Nachteil, dass sie nicht ausreichend widerstandsfähig gegenüber einwirkenden Zugkräften und/oder Torsionskräften sind. Insoweit können bei Einwirkung derartiger Kräfte Beeinträchtigungen der Schutzfunktion bzw. Beschädigungen des Schutzrohres resultieren.

Aus DE 198 26 950 C1 ist ein Schutzrohr für eine Versorgungsleitung bekannt, die beispielsweise Brauchwasser- oder Heizungsrohre umfasst. Zum Schutz werden die Versorgungsleitungen durch ein zumeist als Kunststoffwellrohr ausgebildetes Schutzrohr geführt. Die Wellenberge und Wellentäler dieses Kunststoffwellrohres sind als umlaufende Wellenberge und Wellentäler ausgebildet. - Weiterhin ist aus EP 2 412 963 A1 ein Wellrohr einer Kraftstoffleitung bekannt, wobei aber der Kraftstoff durch das Wellrohr selbst fließen soll. Auch hier sind die Wellenberge und Wellentäler des Wellrohres umlaufend ausgeführt. - DE 10 2005 053390 A1 beschreibt ein Wellrohr aus thermoplastischem Material, insbesondere zur Förderung von Waschflüssigkeit in Scheibenwaschund Scheinwerferreinigungsanlagen in einem Fahrzeug. Das Wellrohr ist hier nicht als Schutzrohr, sondern ebenfalls als ein die Flüssigkeit führendes Rohr ausgebildet.

Der Erfindung liegt das technische Problem zugrunde, ein Schutzrohr der eingangs genannten Art anzugeben, bei dem die vorstehend beschriebenen Nachteile vermieden werden können. Außerdem liegt der Erfindung das technische Problem zugrunde, ein Leitungsaggregat der eingangs genannten Art mit einem erfindungsgemäßen Schutzrohr anzugeben.

Zur Lösung dieses technischen Problems lehrt die Erfindung ein Schutzrohr der eingangs beschriebenen Art, welches dadurch gekennzeichnet ist, dass ein endseitiger Wellrohrabschnitt zumindest einen endseitigen Wellenberg aufweist, der über den gesamten Umfang des Schutzrohres umläuft und dass der end-seitige Wellrohrabschnitt zumindest einen weiteren endseitigen Wellenberg aufweist, der lediglich über einen Teil des Umfanges des Schutzrohres umläuft, und dabei über mehr als 50% des Umfanges des Schutzrohres umläuft. - Wellrohr bzw. Wellrohrabschnitt meint im Rahmen der Erfindung ein Rohr bzw. einen Rohrabschnitt mit wellenförmig wechselndem Durchmesser. In Längsrichtung des Rohres bzw. des Rohrabschnittes sind also Wellenberge und Wellentäler hintereinander angeordnet. - Zylinderförmiger Rohrabschnitt meint im Rahmen der Erfindung insbesondere einen Rohrabschnitt ohne Wellenberge und Wellentäler. Es liegt im Rahmen der Erfindung, dass ein solcher zylinderförmiger Rohrabschnitt über seine Länge den gleichen Innendurchmesser und/oder den gleichen Außendurchmesser aufweist. Zweckmäßigerweise ist ein zylinderförmiger Rohrabschnitt außen glatt bzw. unprofiliert ausgebildet.

Es liegt im Rahmen der Erfindung, dass das erfindungsgemäße Schutzrohr eine Medienleitung für ein zu temperierendes Medium, insbesondere für eine zu beheizende Harnstofflösung umgibt. Zweckmäßigerweise ist die Medienleitung konzentrisch in dem Schutzrohr angeordnet und Medienleitung und Schutzrohr sind koaxial zueinander orientiert. Es liegt weiterhin im Rahmen der Erfindung, dass zwischen Medienleitung und Schutzrohr ein Zwischenraum vorgesehen ist, in dem Luft bzw. eine Luftschicht vorhanden ist. Nach besonders bevorzugter Ausführungsform der Erfindung wird an zumindest einem Ende des Schutzrohres bzw. an zumindest einem Ende der Medienleitung ein Verbinder bzw. Schnellverbinder angeschlossen. Der Verbinder bzw. Schnellverbinder dient zur Verbindung der Medienleitung bzw. des Schutzrohres mit einer weiteren Medienleitung bzw. mit einem weiteren Schutzrohr oder zur Verbindung mit einem Tank oder dergleichen Aggregat. Gemäß empfohlener Ausführungsform der Erfindung ist das Schutzrohr bzw. das Aggregat aus Schutzrohr und Medienleitung Bestandteil eines Kraftfahrzeuges und insbesondere Bestandteil eines SCR-Systems in einem Kraftfahrzeug.

Zweckmäßigerweise erstreckt sich der mittlere Wellrohrabschnitt über zumindest 50 %, bevorzugt über zumindest 60 % und sehr bevorzugt über zumindest 70 % der Länge des Schutzrohres. Vorzugsweise erstreckt sich dabei der mittlere Wellrohrabschnitt unterbrechungsfrei über den betreffenden Längenabschnitt.

Es empfiehlt sich, dass an jedem Ende des Schutzrohres bzw. im Bereich jedes Endes des Schutzrohres ein bzw. zumindest ein endseitiger Wellrohrabschnitt angeordnet ist. Erfindungsgemäß weist ein endseitiger Wellrohrabschnitt zumindest einen endseitigen Wellenberg auf, der über den gesamten Umfang des Schutzrohres umläuft. Weiterhin weist der endseitige Wellrohrabschnitt zumindest einen weiteren endseitigen Wellenberg auf, der lediglich über einen Teil des Umfanges des Schutzrohres umläuft. Vorzugsweise läuft der genannte zumindest eine Wellenberg über mehr als 50 %, bevorzugt über 50 bis 65 % des Umfanges des Schutzrohres um.

Es hat sich als vorteilhaft erwiesen, dass ein endseitiger Wellrohrabschnitt zwei bis sechs, bevorzugt zwei bis vier endseitige Wellenberge aufweist. Empfohlenermaßen läuft dabei mindestens einer dieser endseitigen Wellenberge über den gesamten Umfang des Schutzrohres um und zumindest einer dieser endseitigen Wellenberge läuft lediglich über einen Teil des Umfanges des Schutzrohres um.

In besonders vorteilhafter Ausgestaltung der Erfindung ist vorgesehen, dass an beiden Enden des Schutzrohres bzw. im Bereich beider Enden des Schutzrohres jeweils zumindest ein zylinderförmiger Rohrabschnitt vorgesehen ist. Es liegt im Rahmen der Erfindung, dass ein solcher zylinderförmiger Rohrabschnitt über seine Länge einen konstanten bzw. gleichbleibenden Außendurchmesser und/oder Innendurchmesser aufweist. Zweckmäßigerweise schließt ein zylinderförmiger Rohrabschnitt unmittelbar an den mittleren Wellrohrabschnitt an und vorzugsweise schließt ein endseitiger Wellrohrabschnitt unmittelbar an einen zylinderförmigen Rohrabschnitt an.

Es empfiehlt sich, dass der zylinderförmige Rohrabschnitt eine größere Wandstärke aufweist als der mittlere Wellrohrabschnitt. Es hat sich als zweckmäßig erwiesen, dass der zylinderförmige Rohrabschnitt eine Wandstärke w₁ von 0,7 bis 1,5 mm aufweist. Vorteilhafterweise beträgt die Wandstärke w₂ des mittleren Wellrohrabschnittes 0,4 bis 0,7 mm. - Es hat sich bewährt, dass die Länge eines zylinderförmigen Rohrabschnittes das 0,5-fache bis 1,5-fache der Länge eines benachbarten endseitigen Wellrohrabschnittes beträgt.

Empfohlenermaßen weist ein endseitiger Wellrohrabschnitt zumindest bereichsweise eine größere Wandstärke w₃ auf als der mittlere Wellrohrabschnitt. Zweckmäßigerweise beträgt die Wandstärke w₃ eines endseitigen Wellrohrabschnittes zumindest bereichsweise 0,7 bis 1,5 mm. Vorteilhafterweise entspricht die Wandstärke w₃ eines endseitigen Wellrohrabschnittes zumindest bereichsweise der Wandstärke w₁ bzw. in etwa der Wandstärke w₁ des benachbarten zylinderförmigen Rohrabschnittes.

Eine sehr bevorzugte Ausführungsform der Erfindung ist dadurch gekennzeichnet, dass zwischen einem Stirnende des Schutzrohres und dem diesem Stirnende zugeordneten endseitigen Wellrohrabschnitt ein zylinderförmiger Endabschnitt des Rohres angeordnet ist. Zylinderförmiger Endabschnitt meint einen Rohrabschnitt ohne Wellenberge und Wellentäler. Es liegt im Rahmen der Erfindung, dass der zylinderförmige Endabschnitt über seine Länge einen konstanten bzw. gleichbleibenden Außendurchmesser und/oder Innendurchmesser aufweist. Vorzugsweise ist die Außenseite des zylinderförmigen Endabschnittes glatt bzw. unprofiliert ausgebildet. Es empfiehlt sich, dass die Länge des zylinderförmigen Endabschnittes das 0,7-fache bis 1,5-fache, bevorzugt das 0,8-fache bis 1,3-fache der Länge des benachbarten endseitigen Wellrohrabschnittes beträgt. Zweckmäßigerweise entspricht die Wandstärke w₄ eines zylinderförmigen Endabschnittes der Wandstärke w₁ bzw. in etwa der Wandstärke w₁ des zylinderförmigen Rohrabschnittes.

Zur Lösung des erfindungsgemäßen technischen Problems lehrt die Erfindung weiterhin ein Leitungsaggregat mit einem erfindungsgemäßen Schutzrohr, einer in dem Schutzrohr aufgenommenen zu temperierenden Medienleitung, insbesondere für eine zu temperierende bzw. zu beheizende Harnstofflösung und mit zumindest einem an zumindest einem Stirnende des Schutzrohres bzw. der Medienleitung angeschlossenen Verbinder bzw. Schnellverbinder. Zweckmäßigerweise ist die zu temperierende bzw. zu beheizende Medienleitung konzentrisch bzw. koaxial in dem äußeren Schutzrohr angeordnet. Es liegt im Rahmen der Erfindung, dass der Verbinder bzw. Schnellverbinder für die Verbindung mit einer weiteren Medienleitung bzw. für die Verbindung mit einem diese Medienleitung umgebenden Schutzrohr vorgesehen ist oder zur Verbindung der zu temperierenden Medienleitung mit einem Tank oder dergleichen Aggregat. Der Verbinder bzw. Schnellverbinder kann dabei insbesondere für eine lineare Verbindung - beispielsweise mit einer weiteren Medienleitung - vorgesehen sein oder aber auch für eine abgewinkelte Verbindung - beispielsweise über einen Winkel von 90° mit einer weiteren Medienleitung oder mit einem Aggregat.

Empfohlenermaßen weist der Verbinder bzw. Schnellverbinder ein Innenteil mit einem inneren Leitungskanal für das zu temperierende fluide Medium auf sowie eine das Innenteil zumindest bereichsweise umgebende äußere Ummantelung. Zweckmäßigerweise ist das Innenteil zur Verwirklichung dieser äußeren Ummantelung mit Kunststoff umgossen bzw. umspritzt. Es liegt im Rahmen der Erfindung, dass die Medienleitung an das Innenteil des Verbinders bzw. Schnellverbinders angeschlossen ist, so dass das fluide Medium bzw. die Harnstofflösung durch die Medienleitung sowie durch den inneren Leitungskanal des Innenteils des Verbinders strömen kann. Gemäß sehr bevorzugter Ausführungsform der Erfindung ist auch das dem Verbinder zugeordnete Ende des Schutzrohres mit dem Kunststoff der äußeren Ummantelung umgossen bzw. umspritzt. Vorzugsweise ist dabei der hier vorgesehene endseitige Wellrohrabschnitt zumindest über einen Teil seiner Länge, bevorzugt über seine gesamte Länge von dem Kunststoff der äußeren Ummantelung umgeben.

Der Erfindung liegt die Erkenntnis zugrunde, dass aufgrund der erfindungsgemäßen Ausgestaltung des Schutzrohres nachteilhafte Einwirkungen von Zugkräften und/oder Torsionskräften auf das Schutzrohr vermieden werden können bzw. beachtlich reduziert werden können. Deshalb ist auch die Gefahr von Beeinträchtigungen bzw. Beschädigungen des Schutzrohres im Vergleich zu den bislang bekannten Schutzrohren wesentlich geringer. Ein erfindungsgemäßes Leitungsaggregat aus Schutzrohr, Medienleitung und Verbinder bzw. Schnellverbinder ist überraschend stabil gegenüber einwirkenden Zugkräften und/oder Torsionskräften. Hervorzuheben ist, dass das erfindungsgemäße Schutzrohr bzw. das erfindungsgemäße Leitungsaggregat mit geringem Aufwand und somit auch mit geringen Kosten realisiert werden kann.

Nachfolgend wird die Erfindung anhand einer lediglich ein Ausführungsbeispiel darstellenden Zeichnung näher erläutert. Es zeigen in schematischer Darstellung:
- **Fig. 1**: eine perspektivische Ansicht eines Endes eines erfindungsgemäßen Schutzrohres,
- **Fig. 2**: eine Seitenansicht des Gegenstandes nach Fig. 1 im Schnitt,
- **Fig. 3**: einen Schnitt A-A durch den Gegenstand gemäß Fig. 2,
- **Fig. 4**: einen Schnitt B-B durch den Gegenstand nach Fig. 2,
- **Fig. 5**: den Gegenstand gemäß Fig. 1 in einer weiteren Ausführungsform,
- **Fig. 6**: einen Schnitt C-C durch den Gegenstand nach Fig. 5 und
- **Fig. 7**: eine Seitenansicht eines erfindungsgemäßen Leitungsaggregates.

Die Figuren zeigen ein erfindungsgemäßes Schutzrohr 1 für eine zu beheizende Medienleitung 2, wobei eine zu beheizende wässrige Harnstofflösung durch diese Medienleitung 2 geführt wird. Die Medienleitung 2 kann beispielsweise mit einem nicht dargestellten Heizdraht beheizt werden. Erfindungsgemäß ist das Schutzrohr 1 lediglich bereichsweise als Wellrohr ausgebildet und das Schutzrohr 1 weist im Ausführungsbeispiel einen mittleren Wellrohrabschnitt 3 mit mittleren Wellenbergen 4 und mittleren Wellentälern 5 auf. Der mittlere Wellrohrabschnitt 3 erstreckt sich vorzugsweise über mehr als 70 % der Länge des Schutzrohres 1. In den Figuren ist jeweils nur ein Ende des Schutzrohres 1 dargestellt. Es liegt im Rahmen der Erfindung, dass das zweite Ende des Schutzrohres 1 analog ausgebildet ist.

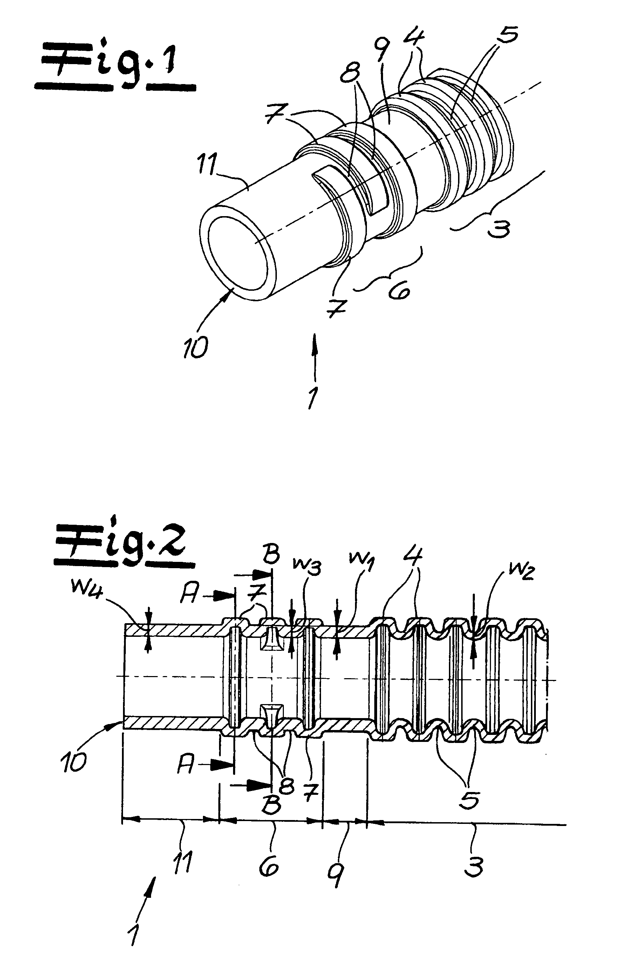

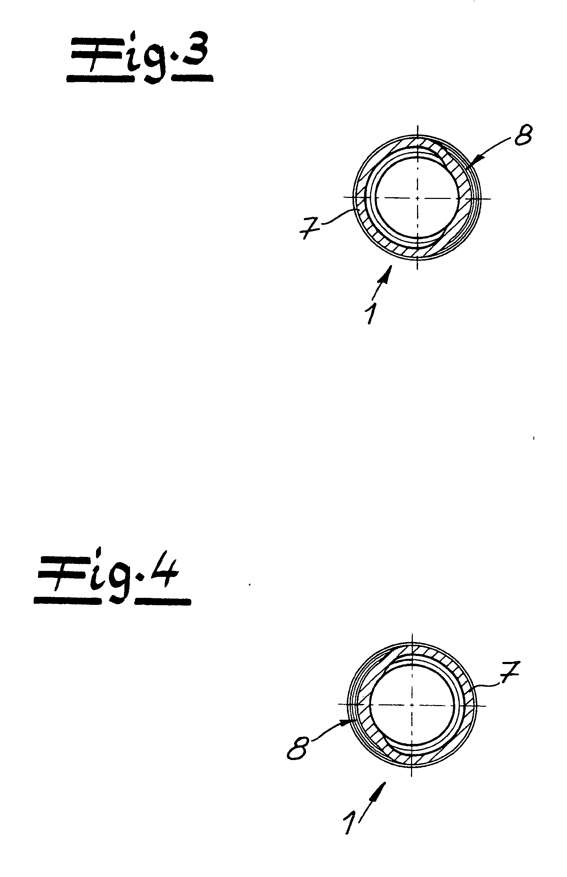

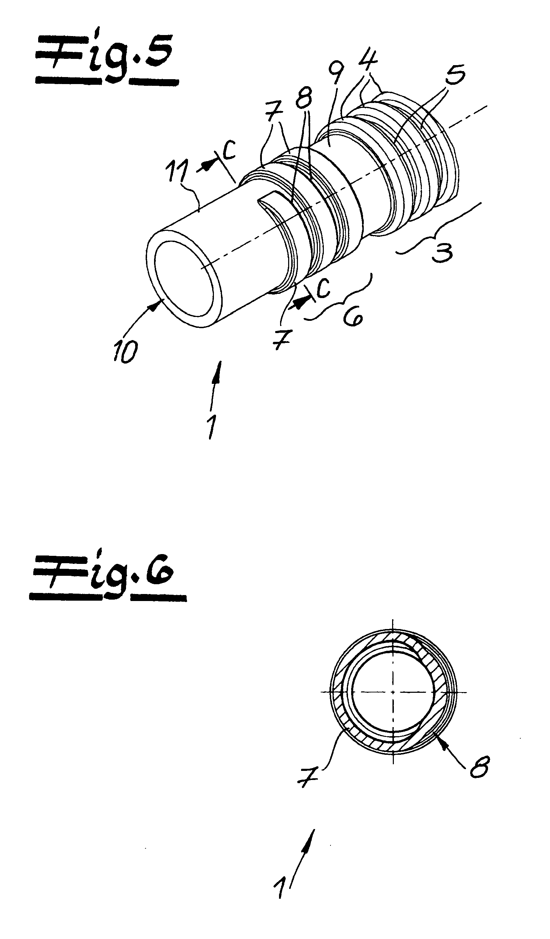

Im Bereich des Endes des Schutzrohres 1 ist vorzugsweise jeweils ein endseitiger Wellrohrabschnitt 6 mit endseitigen Wellenbergen 7 und endseitigen Wellentälern 8 angeordnet. Die mittleren Wellenberge 4 und die mittleren Wellentäler 5 des mittleren Wellrohrabschnittes 3 laufen zweckmäßigerweise und im Ausführungsbeispiel allesamt über den gesamten Umfang des Schutzrohres 1 um. Im Ausführungsbeispiel nach Fig. 1 läuft lediglich ein endseitiger Wellenberg 7 um den gesamten Umfang des Schutzrohres 1 um. Dagegen laufen zwei endseitige Wellenberge 7 lediglich über einen Teil des Umfanges des Schutzrohres 1 um. Diese endseitigen Wellenberge 7 des endseitigen Wellrohrabschnittes 6 laufen im Ausführungsbeispiel aber um mehr als 50 % des Umfanges des Schutzrohres 1 um. Dazu wird insbesondere auf die Fig. 3 und 4 verwiesen. Im Ausführungsbeispiel nach Fig. 5 laufen zwei endseitige Wellenberge 7 des endseitigen Wellrohrabschnittes 6 über den gesamten Umfang des Schutzrohres 1 um. Dagegen läuft nur ein endseitiger Wellenberg 7 des endseitigen Wellrohrabschnittes 6 über lediglich einen Teil des Umfanges des Schutzrohres 1 um, und zwar über mehr als 50 % des Umfanges des Schutzrohres 1 (siehe Fig. 6).

Im Ausführungsbeispiel nach den Figuren ist zwischen dem mittleren Wellrohrabschnitt 3 und dem endseitigen Wellrohrabschnitt 6 ein zylinderförmiger Rohrabschnitt 9 angeordnet. Im Unterschied zu den Wellrohrabschnitten 3, 6 weist dieser zylinderförmiger Rohrabschnitt 9 im Ausführungsbeispiel über seine Länge einen konstanten Außendurchmesser und einen konstanten Innendurchmesser auf. In der Fig. 2 ist erkennbar, dass der zylinderförmige Rohrabschnitt 9 eine Wandstärke w₁ aufweist, die größer ist als die Wandstärke w₂ des mittleren Wellrohrabschnittes 3. Im Ausführungsbeispiel nach den Figuren ist ein endseitiger Wellrohrabschnitt 6 etwas länger als der daran anschließende zylinderförmige Rohrabschnitt 9. Zweckmäßigerweise und im Ausführungsbeispiel entspricht die Wandstärke w₃ eines endseitigen Wellrohrabschnittes 6 zumindest bereichsweise - hier im Bereich der endseitigen Wellentäler 8 - der Wandstärke w₁ des zylinderförmigen Rohrabschnittes 9.

Vorzugsweise und im Ausführungsbeispiel ist zwischen einem Stirnende 10 des Schutzrohres 1 und dem diesem Stirnende zugeordneten endseitigen Wellrohrabschnitt 6 ein zylinderförmiger Endabschnitt 11 des Rohres 1 angeordnet. Die Länge des zylinderförmigen Endabschnittes 11 entspricht im Ausführungsbeispiel nach den Figuren in etwa der Länge des daran anschließenden endseitigen Wellrohrabschnittes 6. Im Ausführungsbeispiel entspricht die Wandstärke w₄ eines zylinderförmigen Endabschnittes 11 der Wandstärke w₁ eines zylinderförmigen Rohrabschnittes 9.

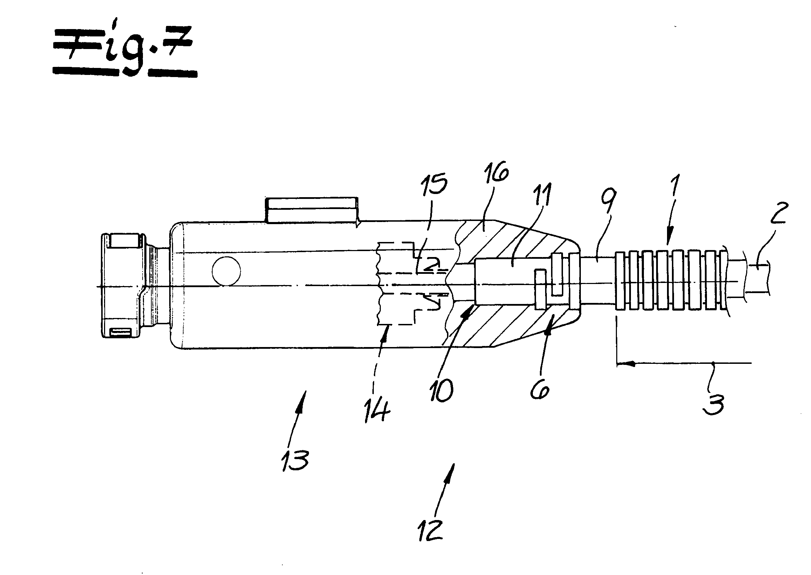

Die Fig. 7 zeigt ein erfindungsgemäßes Leitungsaggregat 12 mit einem erfindungsgemäßen Schutzrohr 1, einer in dem Schutzrohr aufgenommenen zu temperierenden Medienleitung 2 und mit einem an einem Stirnende des Schutzrohres 1 bzw. der Medienleitung 2 angeschlossenen Schnellverbinder 13. Der Schnellverbinder 13 weist ein Innenteil 14 mit einem inneren Leitungskanal 15 für die zu temperierende Harnstofflösung auf. Außerdem ist eine das Innenteil 14 umgebende äußere Ummantelung 16 vorgesehen. Zur Verwirklichung dieser äußeren Ummantelung 16 wird das Innenteil 14 vorzugsweise mit Kunststoff umgossen. Nach sehr bevorzugter Ausführungsform der Erfindung wird auch das an den Schnellverbinder 13 angeschlossene Ende des Schutzrohres 1 mit dem Kunststoff umgossen, so dass der hier angeordnete endseitige Wellrohrabschnitt 6 von dem Kunststoff umgeben ist.

## Patentansprüche

1. Schutzrohr (1) für eine zu temperierende Medienleitung (2), wobei das Schutzrohr (1) bereichsweise als Wellrohr ausgebildet ist, wobei zumindest ein mittlerer Wellrohrabschnitt (3) mit mittleren Wellenbergen (4) und Wellentälern (5) vorgesehen ist, wobei an zumindest einem Ende des Schutzrohres (1) zumindest ein endseitiger Wellrohrabschnitt (6) mit endseitigen Wellenbergen (7) und Wellentälern (8) angeordnet ist und wobei zwischen dem mittleren Wellrohrabschnitt (3) und einem endseitigen Wellrohrabschnitt (6) zumindest ein zylinderförmiger Rohrabschnitt (9) angeordnet ist, **dadurch gekenn**- zeichnet, dass ein endseitiger Wellrohrabschnitt (6) zumindest einen endseitigen Wellenberg (7) aufweist, der über den gesamten Umfang des Schutzrohres, (1) umläuft und dass der endseitige Wellrohrabschnitt (6) zumindest einen weiteren endseitigen Wellenberg aufweist, der lediglich über einen Teil des Umfanges des Schutzrohres (1) umläuft und dabei über mehr als 50% des Umfanges des Schutzrohres (1) umläuft.

2. Schutzrohr nach Anspruch 1, **dadurch gekennzeichnet, dass** sich der mittlere Wellrohrabschnitt (3) über zumindest 50 %, bevorzugt über zumindest 70 % der Länge des Schutzrohres (1) erstreckt.

3. Schutzrohr nach einem der Ansprüche 1 oder 2, **dadurch gekennzeichnet, dass** ein endseitiger Wellrohrabschnitt (6) zwei bis sechs, vorzugsweise zwei bis vier endseitige Wellenberge (7) aufweist.

4. Schutzrohr nach einem der Ansprüche 1 bis 3, **dadurch gekennzeichnet, dass** der zylinderförmige Rohrabschnitt (9) über seine Länge einen konstanten Außendurchmesser und/ oder Innendurchmesser aufweist.

5. Schutzrohr nach einem der Ansprüche 1 bis 4, **dadurch gekennzeichnet, dass** der zylinderförmige Rohrabschnitt (9) eine größere Wandstärke (w₁) aufweist als der mittlere Wellrohrabschnitt (3).

6. Schutzrohr nach einem der Ansprüche 1 bis 5, **dadurch gekennzeichnet, dass** die Länge eines zylinderförmigen Rohrabschnittes (9) das 0,5-fache bis 1,5-fache der Länge eines endseitigen Wellrohrabschnittes (6) beträgt.

7. Schutzrohr nach einem der Ansprüche 1 bis 6, **dadurch gekennzeichnet, dass** zwischen einem Stirnende (10) des Schutzrohres (1) und dem diesem Stirnende zugeordneten endseitigen Wellrohrabschnitt (6) ein zylinderförmiger Endabschnitt (11) des Rohres (1) angeordnet ist.

8. Schutzrohr nach einem der Ansprüche 1 bis 7, **dadurch gekennzeichnet, dass** die Länge des zylinderförmigen Endabschnittes (11) das 0,7-fache bis 1,5-fache der Länge des benachbarten endseitigen Wellrohrabschnittes (6) beträgt.

9. Leitungsaggregat (12) mit einem Schutzrohr (1) nach einem der Ansprüche 1 bis 8, einer in dem Schutzrohr (1) aufgenommenen zu temperierenden Medienleitung (2), insbesondere für eine zu temperierende Harnstofflösung und mit zumindest einem an zumindest einem Stirnende (10) des Schutzrohres (1) bzw. der Medienleitung (2) angeschlossenen Verbinder bzw. Schnellverbinder (13).

10. Leitungsaggregat nach Anspruch 9, **dadurch gekennzeichnet, dass** der Verbinder bzw. Schnellverbinder (13) ein Innenteil (14) mit einem Leitungskanal (15) für das zu temperierende fluide Medium sowie eine das Innenteil (14) zumindest bereichsweise umgebende äußere Ummantelung (16) aufweist und wobei das Innenteil (14) zur Realisierung der äußeren Ummantelung (16) mit Kunststoff umgossen bzw. umspritzt ist.

11. Leitungsaggregat nach einem der Ansprüche 9 oder 10, **dadurch gekennzeichnet, dass** das den Verbinder bzw. Schnellverbinder (13) zugeordnete Ende des Schutzrohres (1) mit dem Kunststoff umgossen bzw. umspritzt ist, so dass der hier vorgesehene endseitige Wellrohrabschnitt (6) zumindest über einen Teil seiner Länge von dem Kunststoff umgeben ist.

## Claims

1. A protective tube (1) for a medium conduit (2) to be tempered, wherein the protective tube (1) is sectionally realized in the form of a corrugated tube, wherein at least one central corrugated tube section (3) with central corrugation crests (4) and corrugation valleys (5) is provided, wherein at least one terminal corrugated tube section (6) with terminal corrugation crests (7) and corrugation valleys (8) is arranged on at least one end of the protective tube (1), and wherein at least one cylindrical tube section (9) is arranged between the central corrugated tube section (3) and a terminal corrugated tube section (6), **characterized in that** a terminal corrugated tube section (6) features at least one terminal corrugation crest (7) that extends over the entire circumference of the protective tube (1), and **in that** the terminal corrugated tube section (6) features at least one additional terminal corrugation crest that only extends over part of the circumference of the protective tube (1), particularly over more than 50% of the circumference of the protective tube (1).

2. The protective tube according to claim 1, **characterized in that** the central corrugated tube section (3) extends over at least 50%, preferably over at least 70%, of the length of the protective tube (1).

3. The protective tube according to claim 1 or 2, **characterized in that** a terminal corrugated tube section (6) features two to six terminal corrugation crests, preferably two to four terminal corrugation crests (7).

4. The protective tube according to one of claims 1-3, **characterized in that** the cylindrical tube section (9) has a constant outside diameter and/or inside diameter over its length.

5. The protective tube according to one of claims 1-4, **characterized in that** the cylindrical tube section (9) has a greater wall thickness (w₁) than the central corrugated tube section (3).

6. The protective tube according to one of claims 1-5, **characterized in that** the length of the cylindrical tube section (9) amounts to 0.5-times to 1.5-times the length of a terminal corrugated tube section (6).

7. The protective tube according to one of claims 1-6, **characterized in that** a cylindrical end section (11) of the tube (1) is arranged between an end face (10) of the protective tube (1) and the terminal corrugated tube section (6) assigned to this end face.

8. The protective tube according to one of claims 1-7, **characterized in that** the length of the cylindrical end section (11) amounts to 0.7-times to 1.5-times the length of the adjacent terminal corrugated tube section (6).

9. A conduit set (12) with a protective tube (1) according to one of claims 1-8, a medium conduit (2) to be tempered, particularly for a urea solution to be tempered, that is accommodated in the protective tube (1) and at least one connector or quick-connector (13) that is attached to at least one end face (10) of the protective tube (1) or the medium conduit (2).

10. The conduit set according to claim 9, **characterized in that** the connector or quick-connector (13) features an inner part (14) with a duct (15) for the fluidic medium to be tempered, as well as an outer casing (16) that at least sectionally surrounds the inner part (14), wherein plastic is cast or injection-molded around the inner part (14) in order to realize the outer casing (16).

11. The conduit set according to one of claims 9 or 10, **characterized in that** plastic is cast or injection-molded around the end of the protective tube (1) assigned to the connector or quick-connector (13) such that the terminal corrugated tube section (6) provided at this location is surrounded by plastic over at least part of its length.

## Revendications

1. Tuyau protecteur (1) pour conduite de fluide à tempérer (2), le tuyau protecteur (1) étant réalisé par endroits sous forme de tuyau ondulé, au moins une section médiane de tuyau ondulé (3) comportant des crêtes d'ondulations (4) et des creux d'ondulations (5) médians étant prévue, au moins une section terminale de tuyau ondulé (6) comportant des crêtes d'ondulations (7) et des creux d'ondulations (8) étant prévue à au moins une extrémité du tuyau protecteur (1) et au moins une section de tuyau de forme cylindrique (9) étant prévue entre la section médiane de tuyau ondulé (3) et une section terminale de tuyau ondulé (6), **caractérisé en ce qu'**une section terminale de tuyau ondulé (6) présente au moins une crête d'ondulation terminale (7) qui entoure toute la circonférence du tuyau protecteur (1) et que la section terminale de tuyau ondulé (6) présente au moins une autre crête d'ondulation terminale qui entoure simplement une partie de la circonférence du tuyau protecteur (1) et entoure ainsi plus de 50 % de la circonférence du tuyau protecteur (1).

2. Tuyau protecteur selon la revendication 1, **caractérisé en ce que** la section médiane de tuyau ondulé (3) s'étend sur au moins 50 %, de préférence sur 70 %, de la longueur du tuyau protecteur (1).

3. Tuyau protecteur selon une des revendications 1 ou 2, **caractérisé en ce qu'**une section terminale de tuyau ondulé (6) présente jusqu'à six, de préférence deux à quatre crêtes d'ondulations terminales (7).

4. Tuyau protecteur selon une des revendications 1 à 3, **caractérisé en ce que** la section de tuyau de forme cylindrique (9) présente sur sa longueur un diamètre extérieur et/ou diamètre intérieur constant.

5. Tuyau protecteur selon une des revendications 1 à 4, **caractérisé en ce que** la section de tuyau de forme cylindrique (9) présente une plus forte épaisseur (w₁) que la section médiane de tuyau ondulé (3).

6. Tuyau protecteur selon une des revendications 1 à 5, **caractérisé en ce que** la longueur d'une section de tuyau de forme cylindrique (9) représente 0,5 fois à 1,5 fois la longueur d'une section terminale de tuyau ondulé (6).

7. Tuyau protecteur selon une des revendications 1 à 6, **caractérisé en ce que**, entre une extrémité avant (10) du tuyau protecteur (1) et la section terminale de tuyau ondulé (6) associée à cette extrémité avant, une section de tuyau (1) de forme cylindrique (9) est disposée.

8. Tuyau protecteur selon une des revendications 1 à 7, **caractérisé en ce que** la longueur de la section de tuyau de forme cylindrique (11) représente 0,7 à 1,5 fois la longueur de la section terminale de tuyau ondulé (6) voisine.

9. Sous-ensemble de canalisation (12) comprenant un tuyau protecteur (1) selon une des revendications 1 à 8, dans lequel une conduite de fluide (2) à tempérer reçue dans le tuyau protecteur (1), en particulier pour une solution d'urée à tempérer, et comportant au moins un connecteur ou connecteur rapide (13) raccordé à au moins une extrémité avant (10) du tuyau protecteur (1) ou de la conduite de fluide (2).

10. Sous-ensemble de canalisation selon la revendication 9, **caractérisé en ce que** le connecteur ou connecteur rapide (13) présente une partie intérieure (14) comportant un canal de conduite (15) pour le fluide à tempérer et une chemise extérieure (16) entourant la partie intérieure (14) du moins par endroits et la partie intérieure (14) est coulée ou injectée autour avec du plastique pour réaliser la chemise extérieure (16).

11. Sous-ensemble de canalisation selon une des revendications 9 ou 10, **caractérisé en ce qu'**on injecte ou qu'on coule du plastique autour de l'extrémité associée au connecteur ou connecteur rapide (13) du tuyau protecteur (1), de sorte que la section de tuyau ondulé terminale qui y est prévue (6) est entourée par le plastique au moins sur une partie de sa longueur.
